# EUROPEAN PATENT SPECIFICATION

(11) **EP 2 608 495 B1**
(45) Date of publication and mention of the grant of the patent: **17.08.2016**
(21) Application number: 12198565.9
(22) Date of filing: 20.12.2012
(51) Int. Cl.: H04M 1/2745, H04M 1/725, G06F 3/0488, H04M 1/56

(54) **Method and Apparatus for Providing a Shortcut Number in a User Device**
Verfahren und Vorrichtung zur Bereitstellung einer Shortcut-Nummer in einer Benutzervorrichtung
Procédé et appareil permettant de fournir un numéro de raccourci dans un dispositif utilisateur

(30) Priority: 20.12.2011 KR 20110138486
(43) Date of publication of application: 26.06.2013
(73) Proprietor: Samsung Electronics Co., Ltd, Gyeonggi-do 443-742 (KR)
(72) Inventor: Park, Sungwook, 443-742 Gyeonggi-do (KR); Park, Sehwan, 443-742 Gyeonggi-do (KR); Kim, Jihoon, 443-742 Gyeonggi-do (KR); Lee, Jaeyong, 443-742 Gyeonggi-do (KR); Lee, Jihoon, 443-742 Gyeonggi-do (KR)
(74) Representative: Birchenough, Lewis

(56) References cited:
- EP-A1- 1 796 352
- EP-A1- 2 312 812
- EP-A2- 0 719 021
- EP-A2- 1 843 621
- WO-A1-99/16181
- WO-A1-2008/025126
- US-A1- 2008 234 006

## Description

### BACKGROUND OF THE INVENTION

### 1. Field of the Invention

The present invention relates generally to a method and apparatus for providing a function in a touch input-enabled user device and, in particular, to a method and apparatus for providing a shortcut number in the user device for intuitively and quickly entering information using the shortcut keys in a communication mode.

### 2. Description of the Related Art

A user of a conventional electronic communication device, e.g., a mobile phone, is often capable of registering a shortcut number representing frequently used contact information in a phonebook of the device and placing a call to the contact information by a simplified input of the shortcut number. For example, the user places a call to a phone number using a long press of a key corresponding to a shortcut number key on the keypad in a voice call mode. The device detects the long press and makes a call to the recipient corresponding to the contact information represented by the shortcut number.

However, even using this conventional type of short cut operation, the user still has to memorize the contact information mapped to the respective shortcut numbers. Accordingly, as the number of registered shortcut numbers increases, it becomes more and more difficult for the user to memorize all of the mappings between the contact information and the shortcut numbers. That is, the user's burden of memorizing the shortcut number mappings increases in proportion to the number of the registered shortcut numbers. Consequently, the advantage of the shortcut numbers deteriorates.

EP 2312812 A1 describes a method for performing communication in a mobile terminal including determining whether the mobile terminal has entered a shortcut mode. EP 1796352 A1 describes a system for informing a user of functions or characters associated with keys on a mobile communications device comprising a display screen and a keyboard. US 2008/234006 A1 describes using a mobile communication device in the context of facilitating contact from within a telephone application. WO 99/16181 A1 describes a graphical user interface providing a "Universal Mailbox". EP 0719021 A2 describes a method of "originating" or initiating a call in a communication terminal device. WO 2008/025126 A1 describes a technique for simplifying call initiation on a device with potential for a large number of stored telephone numbers through the use of an integrated field for entry of an ambiguous filter string. EP 1843621 A2 describes a service restriction apparatus and method for a portable communication device.

### SUMMARY OF THE INVENTION

The present invention is designed in an effort to solve at least the above-described problems and to provide at least the advantages described below.

Accordingly, an aspect of the present invention is to provide a method and apparatus for providing a shortcut number in a user device for facilitating intuitive shortcut number utilization.

Another aspect of the present invention is to provide a method and apparatus for providing a shortcut number in a user device that is capable of improving user convenience in a communication mode including voice call mode, messaging mode, and messenger mode.

Another aspect of the present invention is to provide a method and apparatus for providing a shortcut number in a user device that intuitively enters a shortcut number intuitively without a memorization burden.

Another aspect of the present invention is to provide a method and apparatus for providing a shortcut number in a user device that are capable of facilitating entry of a call number with a corresponding shortcut number by presenting contact information matching shortcut numbers on corresponding numerical keys of a keypad when the cursor is positioned on the recipient information entry box in the communication mode.

Another aspect of the present invention is to provide a method and apparatus for providing a shortcut number in a user device that are capable of sorting shortcut numbers into groups based on a number of digits, retrieving a group in adaptation to a number entered into a recipient information entry box, and presenting contact information corresponding to the shortcut numbers in the retrieved group.

In accordance with an aspect of the present invention, there is provided a method of providing a shortcut number in a user device, the method comprising the steps of: executing a shortcut number input mode; extracting user information mapped to shortcut numbers in the shortcut number input mode; displaying the user information mapped to the shortcut numbers with number keys of a touch keypad that match the shortcut numbers; and detecting a touch event on the touch keypad; wherein, when the touch event is determined to be a short press touch event, the method further comprises: entering a number matching the number key selected by the touch event into a recipient information entry window; interpreting the touch event as a request for another shortcut number group, the new shortcut number group corresponding to one or more numbers presented in the recipient information entry window; and reconfiguring the touch keypad based on shortcut number information of the called shortcut number group; wherein reconfiguring the touch keypad comprises determining a two- or more-digit shortcut number by combining one or more numbers presented in the recipient information entry window as preceding digits of the shortcut number and one of the numbers corresponding to the number keys of the touch keypad as a subsequent digit of the shortcut number.

An exemplary embodiment of the present invention provides a computer readable storage media including programs for executing the shortcut number provision method by means of a processor.

In accordance with another aspect of the present invention, there is provided a user device for providing a shortcut number, the user device comprising: a display panel arranged to display, in a shortcut number input mode, a recipient information entry window and a touch keypad including a plurality of number keys matching shortcut numbers and user information mapped to the shortcut numbers; a touch panel arranged to detect a touch event on the touch keypad; and a control unit arranged to: control displaying the user information mapped to the shortcut numbers for a shortcut number group on the number keys of the touch keypad; wherein the control unit is arranged to, when the detected touch event is determined to be a short press touch event: enter a number matching the number key selected by the touch event into the recipient information entry window; interpret the touch event as a request for another shortcut number group, the new shortcut number group corresponding to one or more numbers presented in the recipient information entry window; and reconfigure the touch keypad based on shortcut number information of the called shortcut number group; wherein reconfiguring the touch keypad comprises determining a two- or more-digit shortcut number by combining one or more numbers presented in the recipient information entry window as preceding digits of the shortcut number and one of the numbers corresponding to the number keys of the touch keypad as a subsequent digit of the shortcut number.

The foregoing has outlined rather broadly the features and technical advantages of the present invention in order that the detailed description of the invention that follows may be better understood. Additional features and advantages of the invention will be described hereinafter which form the subject of the claims of the invention.

### BRIEF DESCRIPTION OF THE DRAWINGS

The above and other aspects, features, and advantages of certain embodiments of the present invention will be more apparent from the following detailed description taken in conjunction with the accompanying drawings, in which:
FIG. 1 is block diagram illustrating a user device according to an embodiment of the present invention;
FIGs. 2 and 3 illustrate screen interfaces of a user device for supporting a shortcut number control function according to an embodiment of the present invention;
FIGs. 4 to 6 illustrate screens images displaying a shortcut number-based counterpart user information input method of a user device according to an embodiment of the present invention;
FIG. 7 is a flowchart illustrating a shortcut number-based recipient information input method of a user device according to an embodiment of the present invention; and
FIG. 8 is a flowchart illustrating a shortcut number-based recipient information input method of a user device according to another embodiment of the present invention.

### DETAILED DESCRIPTION OF EMBODIMENTS OF THE INVENTION

Various embodiments of the present invention are described in detail below with reference to the accompanying drawings. The same reference numbers are used throughout the drawings to refer to the same or like parts. Detailed descriptions of well-known functions and structures incorporated herein may be omitted to avoid obscuring the subject matter of the present invention.

Embodiments of the present invention provide a method and apparatus for providing a shortcut number that are capable of intuitively and quickly entering counterpart user information in the user device operating in a communication mode. Herein, the term "communication mode" is used to indicate an operation mode using information about a counterpart user, such as a voice call mode or a messenger mode (e.g., Social Networking Service (SNS)).

In accordance with an embodiment of the present invention, a touch input-enabled touch-keypad includes a plurality of number keys that are presented with respective counterpart user information, when a cursor is positioned on a recipient information entry window in the communication mode.

In accordance with an embodiment of the present invention, shortcut numbers are sorted into groups, based on a number of digits (e.g., a single digit group, a two digits group, a three digits group, etc.) and selects a digit group depending on the number of digits entered into the recipient number entry window to show candidate recipients belonging to the selected digit group.

In accordance with an embodiment of the present invention, digit group of the shortcut numbers can be generated with the number keys, i.e., keys 0 to 9, of the touch keypad, and can be sorted into N (N is a natural number) designated by the user. For example, there can be total N digit groups that are determined according to the number of digits of the shortcut number and the start digit of the shortcut number that are configured by the user, e.g., a single digit group of which the start numbers are 0 to 9, a two digit group starting with 1 (i.e., 10 to 19), a two digit group starting with 2 (i.e., 20 to 29), and a three digit group starting with distinct start digits (e.g., 100 to 109, 110 to 119, 120 to 129, ..., 990 to 999), etc.

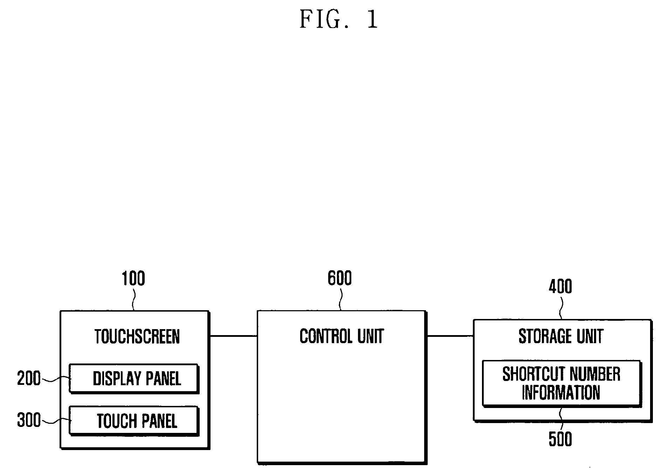

FIG. 1 is a block diagram illustrating a user device according to an embodiment of the present invention.

Referring to FIG. 1, the user device includes a touch screen 100, a storage unit 400, and a control unit 600.

Although not illustrated in FIG. 1, the user device may include an audio processing unit having a microphone and a speaker, a digital broadcast module for receiving digital broadcast (e.g., a Digital Multimedia Broadcasting (DMB) and Digital Video Broadcasting (DVB)), a camera module, a short range communication module (e.g., Bluetooth, Infrared Data Association (IrDA), Radio Frequency Identification (RFID), or Near Field Communication (NFC) communication modules), an input unit for supporting hard key-based input, a Radio Frequency (RF) unit for supporting mobile voice, video, and data communication, a communication module for supporting Internet Protocol (IP) - based communication, a battery, etc.

Herein, the terms "unit" and "module" refer to a device or a combination of software and a device.

The touch screen 100 includes a display panel 200 and a touch panel 300, which receive and display information simultaneously. Particularly, in accordance with an embodiment of the present invention, the touch screen 100 detects a touch event made on the touch panel 300 while displaying an execution screen of a communication mode on the display panel 200 (e.g., call progressing screen, message composition screen, chatting screen, etc.) and delivers an input signal corresponding to the touch event to the control unit 600.

Upon receipt of an input signal, the control unit 600 checks the type of the touch event and controls the user information that is displayed, presenting counterpart user information corresponding to a shortcut number in a recipient information entry window, or executing a corresponding function, according to the touch event type.

The display panel 200 displays a screen associated with an operation state of the user device. For example, the display panel 200 displays a lock screen, a home screen, a menu screen, an outgoing call processing screen, a message composition screen, a chatting screen, etc.

In accordance with an embodiment of the present invention, the display panel 200 displays a dedicated touch keypad and recipient information entry window for receiving a shortcut number selection/input in a communication mode. The display panel 200 displays counterpart user information mapped to a shortcut number of each numeral key by a number of digits of the shortcut number.

In accordance with an embodiment of the present invention, the display panel 200 may be implemented with a Liquid Crystal Display (LCD), a Light Emitting Diode (LED), an Organic LED (OLED), or an Active Matrix OLED (AMOLED).

Additionally, in displaying the aforementioned screens, the display panel 200 can switch between landscape mode and portrait mode according to the orientation of the user device.

The touch panel 300 can be laminated on a surface of the display panel 200 and detects a touch event made by the user on the surface of the touch screen 100, which corresponds to an input (e.g., a long press input, a short press input, etc.).

When a touch event is detected on the surface of the touch screen 100, the touch panel 300 checks the coordinates at a point at which the touch event is detected and delivers the coordinates to the control unit 600. That is, the touch panel 300 detects an occurrence of the touch event triggered by the user and sends an input signal corresponding to the touch event to the control unit 600.

The control unit 600 performs a function corresponding to the coordinates where the touch event occurred. In accordance with an embodiment of the present invention, the touch panel 300 detects the touch event made by the user to select a shortcut number presented on a touch keypad dedicated to a communication mode execution screen of the user device.

The storage unit 400 stores various applications and data that can be executed and processed by the user device. The storage unit 400 may be implemented with at least one of volatile memory and a non-volatile memory.

In accordance with an embodiment of the present invention, the storage unit 400 can be implemented with at least one of a Read Only Memory (ROM), a flash memory, a Random Access Memory (RAM), an internal Hard Disk Drive (HDD), an external HDD, and other external storage media.

The storage unit 400 stores an Operating System (OS) of the user device and programs and data associated with the touch screen-based input and displays control operations and dedicated touch keypad-based shortcut number function control operations temporarily or semi-persistently.

In accordance with an embodiment of the present invention, the storage unit 400 stores shortcut number information 500, which includes shortcut numbers that are preconfigured with available digits 0 to 9, counterpart user information mapped to the shortcut numbers (e.g., counterpart user name, nickname, and phone number), and shortcut number group information.

The control unit 600 controls overall operations of the user device. Accordingly, the control unit 600 controls operations related to displaying counterpart user information mapped to the respective keys of the touch keypad dedicated to the communication mode and places a call to the phone number corresponding to the selected shortcut number.

More specifically, the control unit 600 displays the counterpart user information matching the shortcut numbers designated to the keys of the touch keypad, when a cursor is placed on a recipient information entry window in the communication mode. The control unit 600 sorts the shortcut numbers into groups, based on a number of digits of the shortcut number (e.g., a one bit number, a two-bit number, a three-bit number, etc.) and displays the shortcut numbers with the number keys according to the digits input in the recipient information entry window.

As described above, the digit group of the shortcut numbers can be generated with the numeral keys, i.e., 0 to 9 keys, of the touch keypad and can be sorted into N digit groups (N is a natural number), as designated by the user. For example, there can be total N digit groups that are determined according to the number of digits of the shortcut number and the start digit of the shortcut number that are configured by the user, e.g, a single digit group of which the start numbers are 0 to 9, a two digit group starting with 1 (i.e., 10 to 19), a two digit group starting with 2 (i.e., 20 to 29), and a three digit group starting with distinct start digits (e.g., 100 to 109, 110 to 119, 120 to 129, ..., 990 to 999), etc.

In a communication mode, the control unit 600 checks the shortcut number information 500 and identifies shortcut numbers corresponding to the single digit shortcut number groups matching the keys of the initially provided touch keypad (e.g., 0 to 9 digit shortcut number groups), which hereinafter, are referred to as a first shortcut number group. The control unit 600 also displays counterpart user information mapped to the shortcut numbers matching respective numeral keys belonging to the respective first shortcut number group.

The control unit 600 detects a touch event triggered by the user, when the shortcut numbers of the first shortcut number group are presented with the corresponding numeral keys. For example, if the touch event is a long press input, the control unit 600 determines to execute a function corresponding to the shortcut number and execute the corresponding function designated to the communication mode. If the communication mode is the voice call mode, the control unit 600 controls that the user device to display the counterpart user information corresponding to the shortcut number to which the long press has been applied in the recipient information entry window or a call is placed to the counterpart user based on the counterpart user information.

As another example, if the communication mode is a messaging mode or a messenger mode, the control unit 600 controls that the user device to enter the counterpart user information corresponding to a shortcut number matching a numeral key to which the long press has been applied.

If the touch event is a short press input of which press time is less than a predetermined time duration, the control unit 600 controls the user device to enter a number represented by a numeral key to which the touch event has occurred in the recipient information entry window, extract the shortcut number group to which the shortcut number belongs, and present the recipient user information of the shortcut numbers along with the corresponding numeral keys. If the touch event (e.g., a short press) occurs at the 5 key, where the counterpart user information mapped to the shortcut numbers matching 0 to 9 numeral keys of the touch keypad, the control unit 600 retrieves the shortcut numbers belonging to the two digit shortcut number group having the start digit of 5 (i.e., 50 to 59) and retrieves the counterpart user information mapped to the respective shortcut numbers of the group.

The counterpart user information can be presented on the corresponding numeral keys. That is, the control unit 600 changes the counterpart user information presented in association with the previous shortcut number groups for the counterpart user information of new shortcut number groups. For example, the replacement of the counterpart user information can be made with fade-in and fade-out effects.

As described above, the control unit 600 controls operations related to functions proposed in accordance with an embodiment of the present invention.

Additionally, the control unit 600 controls operations related to normal functions of the user device. For example, the control unit 600 controls execution of a specific application and displays an execution screen of the application. The control unit 600 also controls the receipt of input signals generated in the touch event detected through the touch input interface and execution of a function corresponding to the input signal. The control unit 600 also controls data transmission and reception over a wired or wireless communication link.

A user device according to an embodiment of the present invention can be embodied as any type of information communication device or multimedia device. For example, the user device can be a tablet Personal Computer (PC), a smartphone, a digital camera, a Portable Multimedia Player (PMP), a media player, a portable game console, a portable computer, a Personal Digital Assistant (PDA), etc., as well as mobile communication terminals operating on various communication protocols adopted to different communication systems.

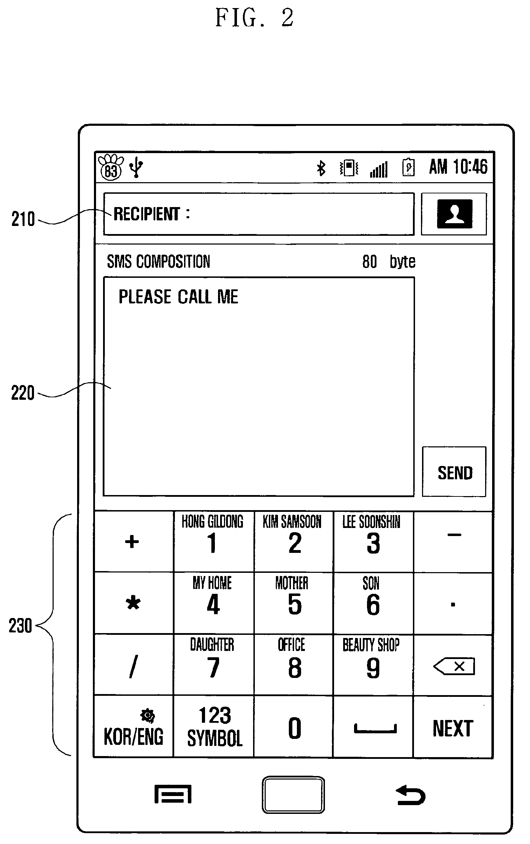

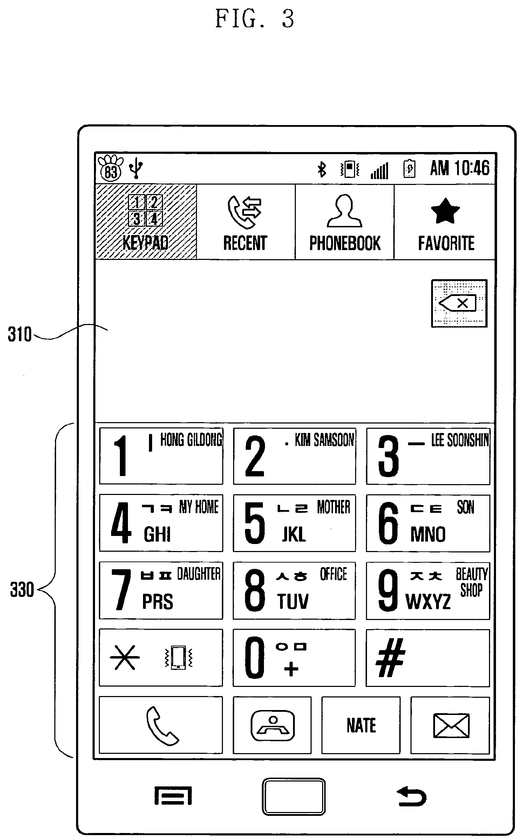

FIGs. 2 and 3 illustrate screen interfaces of a user device for supporting a shortcut number control function according to an embodiment of the present invention. Specifically, FIG. 2 illustrates an execution screen of a message mode according to an embodiment of the present invention, and FIG. 3 illustrates an execution screen of a voice call mode according to an embodiment of the present invention.

Referring to FIG. 2, the execution screen of the message mode includes a recipient information entry window 210, a message entry window 220, and a touch keypad 230.

Referring to FIG. 3, the voice call mode execution screen includes a recipient information entry window 310 and a touch keypad 330. Accordingly, a screen interface of each communication mode can be configured differently according to the type of the user device.

Referring to FIGs. 2 and 3, the touch keypads 230 and 330 include number keys with counterpart user information (e.g., name, nickname, phone number, etc.) mapped to shortcut numbers in each communication mode. Basically, FIGs. 2 and 3 are directed to counterpart user information matching single digit shortcut numbers that are presented in association with respective numeral keys.

More specifically, in a single digit group (e.g., 0 to 9) shortcut numbers 1 to 9 are registered as 1 for Hong Gildong, 2 for Kim Samsoon, 3 for Lee Soonshin, 4 for home, 5 for mother, 6 for son, 7 for daughter, 8 for office, and 9 for beauty shop. That is, keys 1 to 9 of the touch keypads 230 and 330 are displayed with the counterpart user information matching the corresponding shortcut keys.

In an embodiment of the present invention, the counterpart user information can be presented in the form of name, nickname, or phone number according to the type of the user information registered with the phonebook.

Additionally, the user may reset a specific shortcut number to new counterpart user information such that the updated counterpart user information matching the shortcut number is presented along with the corresponding number key. For example, if the user changes the information registered with the numeral key 1 from "Hong Gildong" to "father", the numeral key 1 is presented with the counterpart user information "father".

In accordance with an embodiment of the present invention, when the user devices enters a communication mode, the touch keypad 230 or 330 appears with the counterpart user information matching the shortcut numbers registered with the respective numeral keys.

Although not illustrated in FIGs. 2 and 3, the touch keypad can be configured such that counterpart user information matching two or more digit shortcut numbers are presented in association with the respective numeral keys.

For example, the counterpart user information matching different length shortcut numbers (e.g. 11, 25, 117, etc.) can be presented on the touch keypads 230 and 330. The touch keypads 230 and 330 can be configured such that the counterpart user information determined according to the value entered in the recipient information entry window and a number of digits of the entered value are presented on the touch keypad in the form of lists.

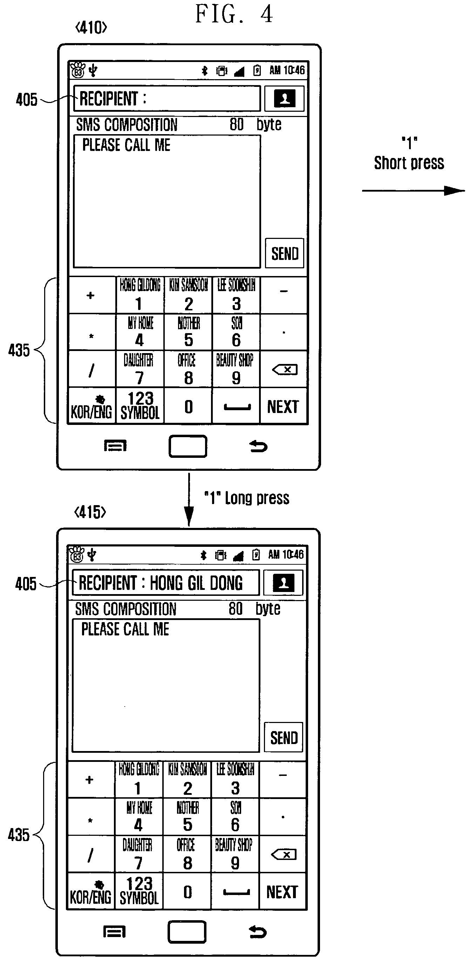

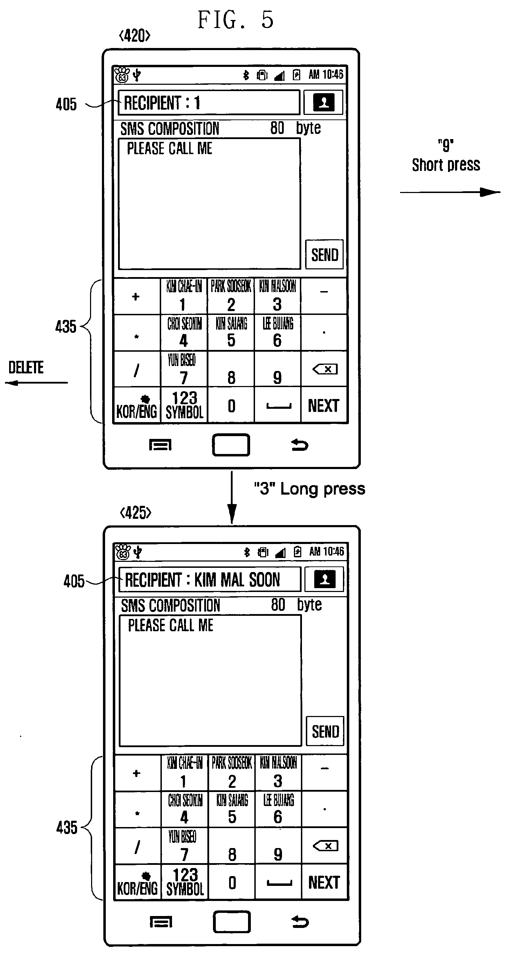

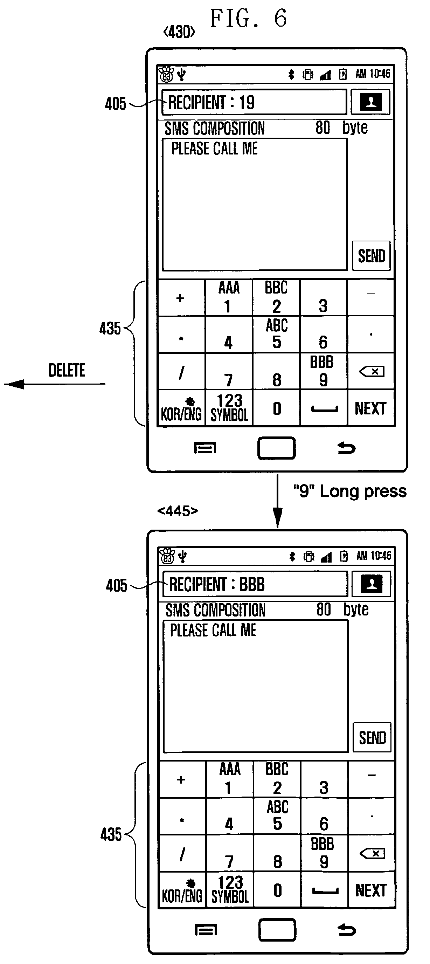

FIGs. 4 to 6 illustrate screens images displaying a shortcut number-based counterpart user information input method of a user device according to an embodiment of the present invention.

Referring to FIGs. 4 to 6, in screen 410, a recipient information entry window 405 is empty and number keys of the touch keypad 435 are presented with counterpart user information matching shortcut keys mapped to corresponding single digit numbers. Again, Hong Gildong is registered with number key 1, Kim Samsoon with number key 2, Lee Soonshin is registered with number key 3, Home is registered with number key 4, mother is registered with number key 5, son is registered with number key 6, daughter is registered with number key 7, office is registered with number key 8, and beauty shop is registered with number key 9; The numeral key 1 is presented with "Hong Gildong", 2 with "Kim Samsoon", 3 with "Lee Soonshin", 4 with "Home", 5 with "mother", 6 with "son", 7 with "daughter", 8 with "office", and 9 with "beauty shop" as shown in the exemplary screen 410.

The user triggers a touch event (e.g., a long press) for selecting one of the counterpart user information or another touch event (e.g., a short press) for searching for another shortcut number group.

In screen 410, when the user inputs a long press on number key 1 to select the counterpart user information of Hong Gildong, the control unit 600 checks the shortcut number 1 mapped to number key 1 and retrieves the counterpart user information matching the shortcut number 1 in response to the input signal corresponding to the touch event. Thereafter, the control unit 600 enters the retrieved counterpart user information (e.g., Hong Gildong) the recipient information entry window, as shown in screen 415.

Alternatively, in screen 410, when the user triggers a short press touch event onto number key of 1 to search for a two digit-shortcut number starting with 1, the control unit 600 enters 1 in the recipient information entry window 405, as shown in screen 420. Additionally, the control unit 600 checks the two-digit group of shortcut numbers starting with 1 (i.e., 10 to 19), retrieves the counterpart user information matching the two digit shortcut numbers, and presents counterpart user information mapped to the two-digit shortcut numbers starting with 1 on respective number keys matching a second digit of the two-digit shortcut numbers. Specifically, in screen 420, Kim Chaek-im is mapped to 11 and displayed on number key 1, Park Sooseok is mapped to 12 and displayed on number key 2, Kim Malsoon is mapped to 13 and displayed on number key 3, Choi Seon-im is mapped to 14 and displayed on number key 4, Kim Sajang is mapped to 15 and displayed on number key 5, Lee Bujang is mapped to 16 and displayed on number key 6, and Yun Biseo is mapped to 17 and displayed on number key 7. No counterpart user information is mapped to 18 and 19.. Accordingly, the counterpart user information presented in association with the single digit shortcut numbers as shown in screen 410 are replaced by the counterpart user information associated with the two-digit shortcut numbers of which a second digit matches a respective number key, as shown in the screen 420.

Afterward, the user may trigger a type of touch event (e.g. long press) for selecting one of the counterpart user information or another type of touch event (e.g. short press, delete, or delete and short press) for searching another counterpart user information group.

In screen 420, when the user inputs a long press to number key 3 to select the counterpart user information of Kim Malsoon, the control unit 600 checks the shortcut number of 13 that matches number key 3, retrieves the counterpart user information mapped to the shortcut number of 13, and enters the retrieved counterpart user information (e.g., Kim Malsoon) in the recipient information entry window 405, as shown in screen 425.

More specifically, the control unit 600 determines a two-digit shortcut number as a combination of the first digit (i.e., 1) input in the recipient information entry window 405 and the second digit corresponding to the second number key pressed with a short press touch event on the touch keypad 435. Thereafter, the control unit 600 combines the two numbers into a two-digit shortcut number. For example, the control unit 600 combines the figure input in the recipient information entry window 405 as the first digit and the figure assigned to the selected one among the numeral keys (i.e., 0 to 9) of the touch keypad 435 as the second digit into the two-digit shortcut number.

Alternatively, in screen 420, when the user triggers a long press touch event to a number key having no counterpart user information (i.e., one of number key 8, number key 9, and number key 0), the control unit 600 outputs an alarm message notifying that no counterpart user information is mapped to the corresponding shortcut number (i.e., shortcut number of 18, 19, or 10).

In screen 420, the user can also delete 1 from the recipient information entry window 405, such that the control unit 600 returns to screen 410. That is, the control unit 600 controls such that the touch keypad 435 is reconfigured to present the counterpart user information mapped to the single digit shortcut numbers.

Alternatively, in screen 420, when the user triggers a short press touch event to number key 9 to search the three-digit shortcut numbers starting with 19, the control unit 900 enters 9 to the recipient information entry window 405, such that "19" is presented in the recipient information entry window 405, as shown in screen 430. Additionally, the control unit 600 checks a three digit group of shortcut numbers starting with "19" (i.e., 190 to 199) and retrieves counterpart user information mapped to the respective shortcut numbers starting with "19". Accordingly, the control unit 600 presents the number keys of the touch keypad 435 with counterpart user information mapped to respective three-digit shortcut numbers starting with "19", as shown in screen 430. Specifically, in screen 430, AAA is mapped to 191 and displayed on number key 1, BBC is mapped to 192 and displayed on number key 2, ABC is mapped to 195 and displayed on number key 5, and BBB is mapped to 199 and displayed on number key 9. Accordingly, the counterpart user information presented with the corresponding number keys of the touch keypad 435 in screen 420 are replaced by new counterpart user information mapped to shortcut numbers of a new shortcut number group, as shown in screen 430.

The user may trigger a type of touch event (e.g. long press) to select one of the counterpart user information or another type of touch event (e.g. short press, delete, or delete and short press) to call for another shortcut number group in the state of the screen 420.

In screen 430, when the user triggers a long press touch event to number key 9 to select the counterpart user information of BBB, the control unit 600 determines the selection of the shortcut number 199, retrieves the counterpart user information mapped to the shortcut number 199, and enters the retrieved counterpart user information (i.e., BBB) in the recipient information entry window 405, as shown in screen 445. That is, the control unit 600 combines the figures (i.e. 1 and 9) that are previously entered in the recipient information entry window 405 and the figure matching the numeral key (i.e. one of 0 to 9) selected on the touch keypad 435 into a three-digit shortcut number. At this time, the control unit 600 is capable of generating the three-digit shortcut number by aligning the previously entered figures as the starting digits and the newly selected figure as the last digit.

In screen 430, when the user triggers a long press touch event to a number key having no counterpart user information (i.e., one of number keys 3, 4, 6, 7, and 8), the control unit 600 outputs an alarm message notifying the user that no counterpart user information is mapped to the selected shortcut number (i.e., one of 193, 194, 196, 197, and 198).

In screen 430, then the user triggers a touch event to delete "9" from the two digits "19" previously entered in the recipient information entry window 405, the control unit 600 returns to screen 420. That is, the control unit 600 controls such that the touch keypad 435 is reconfigured to present the numeral keys along with the counterpart user information mapped to the two-digit shortcut numbers of which second digit match the respective numeral keys.

As described above, in a method of providing a shortcut number in accordance with an embodiment of the present invention, the control unit 600 checks preconfigured shortcut numbers and presents the counterpart user information mapped to the shortcut numbers with corresponding number keys of the touch keypad for use in a communication mode, thereby alleviating a user of having to memorize mappings between the contact information and the shortcut numbers. The shortcut numbers are grouped by figure(s) entered in the recipient information entry window 405 such that the counterpart user information mapped to the shortcut numbers grouped by the figure(s) are presented along with the numeral keys. For example, when the figure "1" is entered in the recipient information entry window 405, the counterpart user information mapped to the two-digit shortcut numbers of which the first digit is 1 and the second digit matches the respective numeral keys (i.e. 10 to 19) are presented along with the numeral keys of the touch keypad 435. When the figure "2" is entered in the recipient information entry window 405, the counterpart user information mapped to the two-digit shortcut numbers of which the first digit is 2 and the second digit matches the respective numeral keys (i.e. 20 to 29) are presented along with the numeral keys of the touch keypad 435. When the two-digit figure "10" is entered in the recipient information entry window 405, the counterpart user information mapped to the three-digit shortcut numbers of which the first and second digits are 1 and 9 and the third digit matches the respective numeral keys (i.e. 100 to 109) are presented along with the numeral keys of the touch keypad 435. If no shortcut number is registered with a certain numeral key, the numeral key is provided with only the figure assigned thereto without presentation of any counterpart user information.

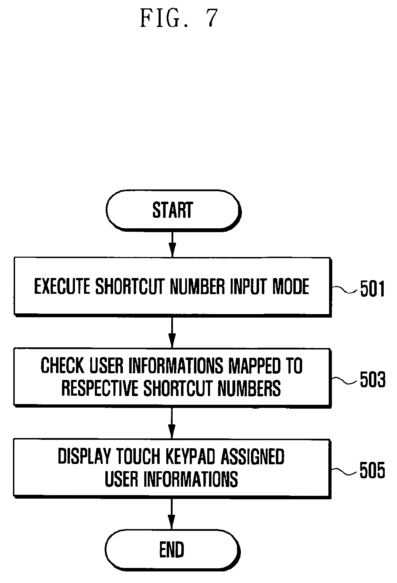

FIG. 7 is a flowchart illustrating a shortcut number-based recipient information input method of a user device according to an embodiment of the present invention.

Referring to FIG. 7, the control unit 600 executes a shortcut number input mode, e.g., in response to the user request, in step 501. As described above, the control unit 600 activates the shortcut number input mode with the execution of various operation modes supporting the use of a list of shortcut numbers such as a communication mode including a voice call mode and a messaging mode. According to an embodiment of the present invention, the shortcut input mode may represent various types of operation modes supporting shortcut number-based functionality.

In step 503, the control unit 600 checks counterpart user information mapped to respective shortcut numbers. For example, the control unit 600 checks the shortcut numbers preconfigured by the user and retrieves the counterpart user information mapped to the shortcut numbers.

In step 505, the control unit 600 displays a touch keypad with the retrieved counterpart user information. For example, the control unit 600 displays the counterpart user information to match a specific shortcut number group according to an execution type of the shortcut number input mode, as described above in conjunction with FIGs. 4 to 6. For example, in the initial execution of the shortcut number input mode, i.e. in the state where no figure is entered in the recipient information entry window, the counterpart user information mapped to the shortcut numbers belonging to the single digit shortcut number group (e.g. 0 to 9) are presented; and then, if at least one figure is entered in the recipient information entry window, the counterpart user information mapped to the shortcut numbers belonged to the two or three-digit shortcut number group (e.g. 10 to 19 or 100 to 109) are presented.

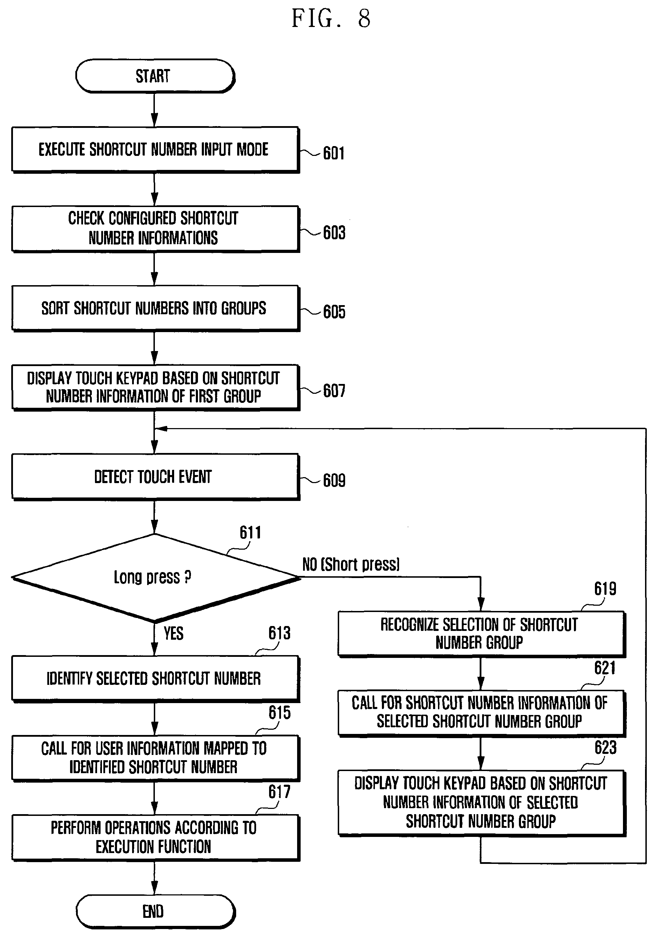

FIG. 8 is a flowchart illustrating a shortcut number-based recipient information input method of a user device according to an embodiment of the present invention.

Referring to FIG. 8, the control unit 600 executes a shortcut number input mode, e.g., in response to a user request, in step 601.

In step 603, the control unit 600 checks preset shortcut numbers in response to the execution of the shortcut number input mode, and in step 605, sorts the shortcut numbers into groups. For example, the control unit 600 checks the shortcut numbers preconfigured by the user, retrieves the mappings between the shortcut numbers and the counterpart user information, and groups the shortcut numbers based on a number of digits.

In step 607, the control unit 600 configures and displays a touch keypad having number keys set for the shortcut numbers of a first shortcut number group among the shortcut number groups as described above in conjunction with FIGs. 4 to 6. For example, the control unit 600 is capable of configuring and displaying the touch keypad having the numeral keys matching the shortcut numbers of the single digit shortcut number group (i.e. 0 to 9) in the initial execution of the shortcut number input mode (i.e. in the state of no figure entered in the recipient information entry window). The screen 10 of FIGs. 4 to 6 shows such an example.

In step 609, the control unit 600 detects a touch event triggered on the touch keypad, when the counterpart user information mapped to the single digit shortcut numbers is presented with the corresponding number keys of the touch keypad.

In step 611, the control unit 600 determines whether the touch event is a long press touch event or a short press touch event. That is, the control unit 600 determines whether the touch event is the long press touch event i.e., if the touch duration is equal to or longer than a predetermined threshold (Also, in the step 611, the control unit 600 determines whether the touch event is the short press touch event, i.e., if the touch duration is shorter than the threshold). According to an embodiment of the present invention, the long press touch event is of selecting one of the counterpart user information mapped to the corresponding numeral keys, and the short press touch event is of calling for another shortcut number group other than the shortcut number group of the shortcut numbers are currently represented by the numeral keys of the touch keypad.

When the touch event is the long press touch event in step 611, the control unit 600 checks the shortcut number matching the number key on which the long press touch event is applied in step 613. That is, the control unit 600 checks the shortcut number matching the number key selected by the touch event.

In step 615, the control unit 600 calls for the counterpart user information mapped to the identified shortcut number, and in step 617, performs a function in response to the user interaction made in association with the counterpart user information. For example, when the shortcut number input mode is activated with the execution of the voice call mode, the control unit 600 enters the retrieved counterpart user information into a recipient information entry window and, if so configured, can automatically call the corresponding recipient. When the shortcut number input mode is activated with the execution of the message mode or the messenger mode, the control unit 600 presents the retrieved counterpart user information in the recipient information entry window. These operations are described above in conjunction with the screens 415, 425, and 445 of FIGs. 4 to 6.

When it is determined that the touch event is a short press touch event in step 611, i.e., the touch duration is less than the predetermined threshold, the control unit 600 interprets the touch event as a request for another shortcut number group in step 619 and calls for the shortcut number group associated with the number key to which the touch event is applied in step 621. For example, the control unit 600 calls for the shortcut number group of which shortcut numbers start with the number matching the number key selected by the short press touch event, checks the shortcut numbers belonging to the corresponding group, and retrieves the counterpart user information mapped to these shortcut numbers, as described above in conjunction with FIGs. 4 to 6.

In step 623, the control unit 600 displays the touch keypad configured in association with the shortcut numbers of the selected shortcut number group. For example, the control unit 600 presents the counterpart user information mapped to the shortcut numbers belonging to the shortcut number group selected by the touch event among the two- or more-digit shortcut number groups (e.g., 10 to 19, 100 to 109, etc.) with the corresponding number keys, as described above in conjunction with FIGs. 4 to 6. At this time, the control unit 600 is capable of controlling such that the figure corresponding to the numeral key selected by the touch event is entered in the recipient information entry window. That is, the control unit 600 is capable of determining a two- or more-digit shortcut number by combining the figure(s) entered into the recipient information entry window and one of the figures corresponding to the numeral keys (i.e. 0 to 9). At this time, the control unit 600 is capable of determining the shortcut number by aligning the figure(s) entered in the recipient information entry window as preceding digit(s) and the figures 0 to 9 matching the numeral keys of the touch keypad as subsequent digit. The above described steps are shown in the exemplary screens 420 and 430 of FIGs. 4 to 6.

Although embodiment of the present invention have been described above where a user device is operates in a communication mode, such as a voice call mode, a message mode, and a messenger mode, the present invention is not limited thereto, and is equally applicable to all the types of operation modes supporting a shortcut number-based execution function. For example, in order to search a list for an item, the items can be mapped to shortcut numbers sorted into groups in order to be quickly retrieved using the number keys.

As described above, a method and apparatus for providing a shortcut number in accordance with an embodiment of the present invention facilitates retrieval of recipient information by providing recipient information when a cursor is positioned on the recipient information entry window in the user device operating in a communication mode.

Additionally, the input of the recipient information is facilitated by sorting the shortcut numbers into groups based on a number of digits and presenting the counterpart user information mapped to the shortcut numbers of a group selected based on the figure input in the recipient information entry window.

Further, the recipient information may be input more intuitively, without having to memorize the preset shortcut numbers, resulting in an improved shortcut number utilization.

Also, the shortcut number provision method and apparatus of the user device according to the present invention is capable of facilitating utilizing the shortcut numbers preregistered by the user, resulting in negation of the burden of shortcut number memorization. Also, the shortcut number provision method and apparatus of the user device according to the present invention is capable of improving the manipulation efficiency of all types of user devices. Furthermore, the shortcut number provision method and apparatus of the user device according to the present invention is capable of optimizing the shortcut number manipulation environment, resulting in improvement of device utilization, user convenience, and device competitiveness.

The methods of providing a shortcut number in accordance with the above-described embodiments of the present invention can be recorded in a computer-readable storage media in the form of program command executable by various types of computing devices. Here, the computer-readable storage media can store the program commands, data files, and data structures independently or in the form of their combination. The program commands recorded in the storage media can be designed and configured for dedicated use in the present invention or the ones well-known to those in the computer software field.

The computer-readable media may be magnetic media such as a hard disk, a floppy disk and magnetic tape, optical media such as a Compact Disk ROM (CD-ROM) and a Digital Versatile Disk (DVD), magneto-optical media such as floptical disk, and hardware device such as a ROM, a RAM, a flash memory, etc., particularly implemented to store and execute program commands. The program commands may be machine language codes produced by a compiler and high-level language codes that can be executed by computers using an interpreter, etc.

While the present invention has been particularly shown and described with reference to certain embodiments thereof, it will be understood by those of ordinary skill in the art that various changes in form and details may be made therein without departing from the scope of the present invention, as defined by the following claims.

## Claims

1. A method of providing a shortcut number in a user device, the method comprising the steps of:
executing (501) a shortcut number input mode;
extracting (503) user information mapped to shortcut numbers in the shortcut number input mode;
displaying (505) the user information mapped to the shortcut numbers with number keys of a touch keypad that match the shortcut numbers; and
detecting (609) a touch event on the touch keypad;
wherein, when the touch event is determined to be a short press touch event, the method further comprises:
entering a number matching the number key selected by the touch event into a recipient information entry window (405);
interpreting (621) the touch event as a request for another shortcut number group, the new shortcut number group corresponding to one or more numbers presented in the recipient information entry window; and
reconfiguring (623) the touch keypad (435) based on shortcut number information of the called shortcut number group;
wherein reconfiguring (623) the touch keypad (435) comprises determining a two- or more-digit shortcut number by combining one or more numbers presented in the recipient information entry window (405) as preceding digits of the shortcut number and one of the numbers corresponding to the number keys of the touch keypad (435) as a subsequent digit of the shortcut number,

2. The method of claim 1, wherein extracting (503) the user information comprises:
extracting preset shortcut number information; and
retrieving the shortcut numbers and the user information mapped to the shortcut numbers, based on the shortcut number information.

3. The method of claim 2, wherein extracting the preset shortcut number information comprises:
searching (603) the preset shortcut numbers;
extracting the shortcut numbers and the user information mapped to the shortcut numbers, based on the shortcut number information; and
sorting (605) the shortcut numbers into groups, based on a number of digits of the shortcut number.

4. The method of claim 1, wherein displaying (505) the user information mapped to the shortcut numbers with number keys of a touch keypad (230) that match the shortcut numbers comprises presenting the user information matching the shortcut numbers of a shortcut number group according to a type of the shortcut number input mode.

5. The method of claim 4, wherein presenting the user information matching the shortcut numbers of the shortcut number group according to the type of the shortcut number input mode comprises at least one of:
presenting the user information mapped to single-digit shortcut numbers on corresponding number keys of the touch keypad (230), when a recipient information entry window (210) is empty; and
presenting the user information mapped to the shortcut numbers starting with a particular number on the corresponding numeral keys of the touch keypad (230), when the recipient information entry window (210) is filled with the particular number.

6. The method of claim 1, further comprising:
detecting a further touch event on the touch keypad;
determining (611) a type of the further touch event; and
controlling an update of the user information presented on the touch keypad or an input made with selected user information according to the type of the further touch event.

7. The method of claim 6, wherein determining (611) the type of the further touch event comprises:
determining (611) that the type of the further touch event is a long press touch event when a touch duration is great than or equal to a threshold

8. The method of claim 7, wherein the long press touch event selects (613) one of the user information presented on the touch keypad, and the short press touch event calls (621) for the user information mapped to the shortcut numbers belonging to another shortcut number group and presents (623) the called shortcut numbers on the touch keypad.

9. The method of claim 7, further comprising:
checking (613) a shortcut number matching a number key selected by the touch event, when the further touch event is the long press touch event;
retrieving (615) user information mapped to the checked shortcut number; and
controlling (617) execution of a function requested in association with the retrieved user information.

10. The method of claim 9, wherein controlling (617) the execution of the function requested in association with the retrieved user information comprises at least one of:
entering the retrieved user information into a recipient information entry window; and
controlling an automatic function execution in association with the retrieved user information according to the function executed with the shortcut number input mode.

11. The method of claim 1, wherein interpreting (621) the touch event comprises:
selecting a group of shortcut numbers starting with a number matching the number key selected by the touch event;
extracting the shortcut number information of the shortcut number group; and
retrieving the shortcut numbers and the user information mapped to the shortcut numbers, based on the shortcut number information.

12. The method of claim 1, wherein reconfiguring (623) the touch keypad (435) further comprises:
updating the touch keypad (435) with number keys matching shortcut numbers of an at least two-digit shortcut number group starting with a number of the number key selected by the touch event;
and presenting (623) the user information mapped to the shortcut numbers with corresponding number keys.

13. The method of claim 1, wherein the shortcut number input mode comprises an operation mode supporting shortcut number-based information input.

14. A user device for providing a shortcut number, the user device comprising:
a display panel (200) arranged to display, in a shortcut number input mode, a recipient information entry window (405) and a touch keypad (435) including a plurality of number keys matching shortcut numbers and user information mapped to the shortcut numbers;
a touch panel (300) arranged to detect (609) a touch event on the touch keypad (435); and
a control unit (600) arranged to:
control displaying (607) the user information mapped to the shortcut numbers for a shortcut number group on the number keys of the touch keypad (435);
wherein the control unit (600) is arranged to, when the detected touch event is determined to be a short press touch event:
enter a number matching the number key selected by the touch event into the recipient information entry window (405);
interpret (621) the touch event as a request for another shortcut number group, the new shortcut number group corresponding to one or more numbers presented in the recipient information entry window; and
reconfigure (623) the touch keypad (435) based on shortcut number information of the called shortcut number group;
wherein reconfiguring (623) the touch keypad (435) comprises determining a two- or more-digit shortcut number by combining one or more numbers presented in the recipient information entry window (405) as preceding digits of the shortcut number and one of the numbers corresponding to the number keys of the touch keypad (435) as a subsequent digit of the shortcut number.

15. The user device of claim 14, wherein the control unit (600) is further arranged to:
extract the user information mapped to the shortcut numbers in the shortcut number input mode; and
display (607) the user information mapped to the shortcut numbers with the number keys of the touch keypad (435) that match the shortcut numbers.

16. The user device of claim 14, wherein the control unit (600) is further arranged to:
search (603) preset shortcut numbers in the shortcut number input mode;
extract the shortcut numbers and the user information mapped to the shortcut numbers based on the shortcut number information; and
sort (605) the shortcut numbers into groups, based on a number of digits of the shortcut number.

17. The user device of claim 14, wherein the control unit (600) is further arranged to:
present the user information mapped to single-digit shortcut numbers on the number keys of the touch keypad (435), when the recipient information entry window is empty (405); and
present the user information mapped to the shortcut numbers starting with a particular number on the number keys of the touch keypad (435), when the recipient information entry window (405) is filled with the particular number.

18. The user device of claim 14, wherein the control unit (600) is further arranged to:
detect a further touch event;
determine (611) a type of the further touch event to be a long press touch event
check (613) the shortcut number matching the number key selected by the further touch event;
retrieve (615) the user information mapped to the checked shortcut number; and
control (617) execution of a function requested in association with the retrieved user information.

19. The user device of claim 18, wherein the control unit (600) is adapted to select user information presented on the touch keypad (435) in response to the long press touch event.

## Patentansprüche

1. Verfahren zum Bereitstellen einer Kurzwahlnummer in einem Benutzergerät, wobei das Verfahren die folgenden Schritte beinhaltet:
Ausführen (501) eines Kurzwahlnummerneingabemodus;
Extrahieren (503) von Benutzerinformationen, die auf Kurzwahlnummern in dem Kurzwahlnummerneingabemodus gemappt sind;
Anzeigen (505) der auf die Kurzwahlnummern gemappten Benutzerinformationen mit Nummerntasten einer Berührungstastatur, die mit den Kurzwahlnummern übereinstimmen; und
Erkennen (609) eines Berührungsevents auf der Berührungstastatur;
wobei das Verfahren, wenn das Berührungsevent als Kurzdruck-Berührungsevent festgestellt wird, ferner Folgendes beinhaltet:
Eingeben einer Nummer, die mit der durch das Berührungsevent ausgewählten Nummerntaste übereinstimmt, in ein Empfängerinformationseingabefenster (405);
Interpretieren (621) des Berührungsevents als Anforderung für eine andere Kurzwahlnummerngruppe, wobei die neue Kurzwahlnummerngruppe einer oder mehreren Nummern entspricht, die in dem Empfängerinformationseingabefenster präsentiert werden; und
Umkonfigurieren (623) der Berührungstastatur (435) auf der Basis der Kurzwahlnummerninformationen der angerufenen Kurzwahlnummerngruppe;
wobei das Umkonfigurieren (623) der Berührungstastatur (435) das Feststellen einer zwei- oder mehrstelligen Kurzwahlnummer durch Kombinieren von einer oder mehreren im Empfängerinformationseingabefenster (405) als vorangehende Stellen der Kurzwahlnummer präsentierten Nummern mit einer der den Nummerntasten der Berührungstastatur (435) als nachfolgende Stelle der Kurzwahlnummer entsprechenden Nummern beinhaltet.

2. Verfahren nach Anspruch 1, wobei das Extrahieren (503) der Benutzerinformationen Folgendes beinhaltet:
Extrahieren von voreingestellten Kurzwahlnummerninformationen; und
Abrufen der Kurzwahlnummern und der auf die Kurzwahlnummern gemappten Benutzerinfomationen auf der Basis der Kurzwahlnummerninformationen.

3. Verfahren nach Anspruch 2, wobei das Extrahieren der voreingestellten Kurzwahlnummerninformationen Folgendes beinhaltet:
Suchen (603) der voreingestellten Kurzwahlnummern;
Extrahieren der Kurzwahlnummern und der auf die Kurzwahlnummern gemappten Benutzerinformationen auf der Basis der Kurzwahlnummerninformationen; und
Sortieren (605) der Kurzwahlnummern in Gruppen auf der Basis einer Anzahl von Stellen der Kurzwahlnummer.

4. Verfahren nach Anspruch 1, wobei das Anzeigen (505) der auf die Kurzwahlnummern gemappten Benutzerinformationen mit Nummerntasten einer Berührungstastatur (230), die mit den Kurzwahlnummern übereinstimmen, das Präsentieren der mit den Kurzwahlnummern einer Kurzwahlnummerngruppe übereinstimmenden Benutzerinformationen gemäß einem Typ des Kurzwahlnummerneingabemodus beinhaltet.

5. Verfahren nach Anspruch 4, wobei das Präsentieren der mit den Kurzwahlnummern der Kurzwahlnummerngruppe übereinstimmenden Benutzerinformationen gemäß dem Typ des Kurzwahlnummerneingabemodus wenigstens eines der Folgenden beinhaltet:
Präsentieren der auf einstellige Kurzwahlnummern gemappten Benutzerinformationen auf entsprechenden Nummerntasten der Berührungstastatur (230), wenn ein Empfängerinformationseingabefenster (210) leer ist; und
Präsentieren der auf die Kurzwahlnummern gemappten Benutzerinformationen beginnend mit einer bestimmten Nummer auf den entsprechenden Nummerntasten der Berührungstastatur (230), wenn das Empfängerinformationseingabefenster (210) mit der bestimmten Nummer ausgefüllt ist.

6. Verfahren nach Anspruch 1, das ferner Folgendes beinhaltet:
Erkennen eines weiteren Berührungsevents auf der Berührungstastatur;
Feststellen (611) eines Typs des weiteren Berührungsevents; und
Steuern eines Update der auf der Berührungstastatur präsentierten Benutzerinformationen oder einer mit gewählten Benutzerinformationen gemappten Eingabe gemäß dem Typ des weiteren Berührungsevents.

7. Verfahren nach Anspruch 6, wobei das Feststellen (611) des Typs des weiteren Berührungsevents Folgendes beinhaltet:
Feststellen (611), dass der Typ des weiteren Berührungsevents ein Langdruck-Berührungsevent ist, wenn eine Berührungsdauer gleich oder größer als ein Schwellenwert ist.

8. Verfahren nach Anspruch 7, wobei das Langdruck-Berührungsevent eine der auf der Berührungstastatur präsentierten Benutzerinformationen auswählt (613) und das Kurzdruck-Berührungsevent die auf die Kurzwahlnummern gemappten Benutzerinformationen anruft (621), die zu einer anderen Kurzwahlnummerngruppe gehören, und die angerufenen Kurzwahlnummern auf der Berührungstastatur präsentiert (623).

9. Verfahren nach Anspruch 7, das ferner Folgendes beinhaltet:
Prüfen (613), ob eine Kurzwahlnummer mit einer durch das Berührungsevent gewählten Nummerntaste übereinstimmt, wenn das weitere Berührungsevent das Langdruck-Berührungsevent ist;
Abrufen (615) von auf die geprüfte Kurzwahlnummer gemappten Benutzerinformationen; und
Steuern (617) der Ausführung einer in Assoziation mit den abgerufenen Benutzerinformationen angeforderten Funktion.

10. Verfahren nach Anspruch 9, wobei das Steuern (617) der Ausführung der in Assoziation mit den abgerufenen Benutzerinformationen angeforderten Funktion wenigstens eines der Folgenden beinhaltet:
Eingeben der abgerufenen Benutzerinformationen in ein Empfängerinformationseingabefenster; und
Steuern der automatischen Ausführung einer Funktion in Assoziation mit den empfangenen Benutzerinformationen gemäß der mit dem Kurzwahlnummerneingabemodus ausgeführten Funktion.

11. Verfahren nach Anspruch 1, wobei das Interpretieren (621) des Berührungsevents Folgendes beinhaltet:
Auswählen einer Gruppe von Kurzwahlnummern beginnend mit einer Nummer, die mit der von dem Berührungsevent gewählten Zahlentaste übeeinstimmt;
Extrahieren der Kurzwahlnummerninformationen der Kurzwahlnummerngruppe; und
Abrufen der Kurzwahlnummern und der auf die Kurzwahlnummern gemappten Benutzerinformationen auf der Basis der Kurzwahlnummerninformationen.

12. Verfahren nach Anspruch 1, wobei das Umkonfigurieren (623) der Berührungstastatur (435) ferner Folgendes beinhaltet:
Aktualisieren der Berührungstastatur (435) mit Nummerntasten, die mit Kurzwahlnummern einer wenigstens zweistelligen Kurzwahlnummerngruppe beginnend mit einer Nummer der durch das Berührungsevent gewählten Nummerntaste übereinstimmen;
und Präsentieren (623) der auf die Kurzwahlnummern gemappten Benutzerinformationen mit entsprechenden Nummerntasten.

13. Verfahren nach Anspruch 1, wobei der Kurzwahlnummerneingabemodus einen Betriebsmodus umfasst, der die Eingabe von Informationen auf der Basis einer Kurzwahlnummer unterstützt.

14. Benutzergerät zum Bereitstellen einer Kurzwahlnummer, wobei das Benutzergerät Folgendes umfasst:
eine Anzeigetafel (200), ausgelegt zum Anzeigen, in einem Kurzwahlnummerneingabemodus, eines Empfängerinformationseingabefensters (405) und einer Berührungstastatur (435) einschließlich mehrerer Nummerntasten, die mit Kurzwahlnummern und auf die Kurzwahlnummern gemappten Benutzerinformationen übereinstimmen;
eine Berührungstafel (300), ausgelegt zum Erkennen (609) eines Berührungsevents auf der Berührungstastatur (435); und
eine Steuereinheit (600), ausgelegt zum:
Steuern des Anzeigens (607) der auf die Kurzwahlnummern gemappten Benutzerinformationen für eine Kurzwahlnummerngruppe auf den Nummerntasten der Berührungstastatur (435);
wobei die Steuereinheit (600), wenn das erkannte Berührungsevent als ein Kurzdruck-Berührungsevent festgestellt wird, ausgelegt ist zum:
Eingeben einer Nummer, die mit der durch das Berührungsevent gewählten Nummerntaste übereinstimmt, in das Empfängerinformationseingabefenster (405);
Interpretieren (621) des Berührungsevents als Anforderung für eine andere Kurzwahlnummerngruppe, wobei die neue Kurzwahlnummerngruppe einer oder mehreren in dem Empfängerinformationseingabefenster präsentierten Nummern entspricht; und
Umkonfigurieren (623) der Berührungstastatur (435) auf der Basis der Kurzwahlnummerninformationen der angerufenen Kurzwahlnummerngruppe;
wobei das Umkonfigurieren (623) der Berührungstastatur (435) das Feststellen einer zwei- oder mehrstelligen Kurzwahlnummer durch Kombinieren von einer oder mehreren in dem Empfängerinformationseingabefenster (405) präsentierten Nummern als vorangehende Stellen der Kurzwahlnummer mit einer der den Nummerntasten der Berührungstastatur (435) entsprechenden Nummern als nachfolgende Stelle der Kurzwahlnummer beinhaltet.

15. Benutzergerät nach Anspruch 14, wobei die Steuereinheit (600) ferner ausgelegt ist zum:
Extrahieren der auf die Kurzwahlnummern gemappten Benutzerinformationen im Kurzwahlnummerneingabemodus; und
Anzeigen (607) der auf die Kurzwahlnummern gemappten Benutzerinformationen mit den Nummerntasten der Berührungstastatur (435), die mit den Kurzwahlnummern übereinstimmen.

16. Benutzergerät nach Anspruch 14, wobei die Steuereinheit (600) ferner ausgelegt ist zum:
Suchen (603) von voreingestellten Kurzwahlnummern im Kurzwahlnummerneingabemodus;
Extrahieren der Kurzwahlnummern und der auf die Kurzwahlnummern gemappten Benutzerinformationen auf der Basis der Kurzwahlnummerninformationen; und
Sortieren (605) der Kurzwahlnummern zu Gruppen auf der Basis einer Anzahl von Stellen der Kurzwahlnummer.

17. Benutzergerät nach Anspruch 14, wobei die Steuereinheit (600) ferner ausgelegt ist zum:
Präsentieren der auf einstellige Kurzwahlnummern gemappten Benutzerinformationen auf den Nummerntasten der Berührungstastatur (435), wenn das Empfängerinformationseingabefenster leer ist (405); und
Präsentieren der auf die Kurzwahlnummern gemappten Benutzerinformationen beginnend mit einer bestimmten Nummer auf den Nummerntasten der Berührungstastatur (435), wenn das Empfängerinformationseingabefenster (405) mit der bestimmten Nummer ausgefüllt ist.

18. Benutzergerät nach Anspruch 14, wobei die Steuereinheit (600) ferner ausgelegt ist zum:
Erkennen eines weiteren Berührungsevents;
Feststellen (611) eines Typs des weiteren Berührungsevents als ein Langdruck-Berührungsevent;
Prüfen (613), ob die Kurzwahlnummer mit der durch das weitere Berührungsevent ausgewählten Nummerntaste übereinstimmt;
Abrufen (615) der auf die geprüfte Kurzwahlnummer abgebildeten Benutzerinformationen; und
Steuern (617) der Ausführung einer Funktion, die in Assoziation mit den abgerufenen Benutzerinformationen angefordert wurde.

19. Benutzergerät nach Anspruch 18, wobei die Steuereinheit (600) zum Auswählen von auf der Berührungstastatur (435) präsentierten Benutzerinformationen als Reaktion auf das Langdruck-Berührungsevent ausgelegt ist.

## Revendications

1. Un procédé de fourniture d'un numéro raccourci dans un dispositif d'utilisateur, le procédé comprenant les opérations suivantes :
l'exécution (501) d'un mode de saisie de numéro raccourci,
l'extraction (503) d'informations d'utilisateur mises en correspondance avec des numéros raccourcis dans le mode de saisie de numéro raccourci,
l'affichage (505) des informations d'utilisateur mises en correspondance avec les numéros raccourcis avec des touches numériques d'un clavier tactile qui correspondent aux numéros raccourcis, et
la détection (609) d'un événement tactile sur le clavier tactile,
où, lorsque l'événement tactile est déterminé être un événement tactile de pression brève, le procédé comprend en outre :
la saisie d'un numéro correspondant à la touche numérique sélectionnée par l'événement tactile dans une fenêtre de saisie d'informations de récepteur (405),
l'interprétation (621) de l'événement tactile en tant que demande pour un autre groupe de numéros raccourcis, le nouveau groupe de numéros raccourcis correspondant à un ou plusieurs numéros présentés dans la fenêtre de saisie d'informations de récepteur, et
la reconfiguration (623) du clavier tactile (435) en fonction d'informations de numéro raccourci du groupe de numéros raccourcis appelé,
où la reconfiguration (623) du clavier tactile (435) comprend la détermination d'un numéro raccourci à deux chiffres ou plus par la combinaison d'un ou de plusieurs numéros présentés dans la fenêtre de saisie d'informations de récepteur (405) en tant que chiffres précédents du numéro raccourci et d'un des numéros correspondant aux touches numériques du clavier tactile (435) en tant que chiffre subséquent du numéro raccourci.

2. Le procédé selon la Revendication 1, où l'extraction (503) des informations d'utilisateur comprend :
l'extraction d'informations prédéfinies de numéro raccourci, et
la récupération des numéros raccourcis et des informations d'utilisateur mises en correspondance avec les numéros raccourcis en fonction des informations de numéro raccourci.

3. Le procédé selon la Revendication 2, où l'extraction des informations prédéfinies de numéro raccourci comprend :
la recherche (603) des numéros raccourcis prédéfinis,
l'extraction des numéros raccourcis et des informations d'utilisateur mises en correspondance avec les numéros raccourcis en fonction des informations de numéro raccourci, et
le tri (605) des numéros raccourcis en groupes en fonction d'un nombre de chiffres du numéro raccourci.

4. Le procédé selon la Revendication 1, où l'affichage (505) des informations d'utilisateur mises en correspondance avec les numéros raccourcis avec des touches numériques d'un clavier tactile (230) qui correspondent aux numéros raccourcis comprend la présentation des informations d'utilisateur correspondant aux numéros raccourcis d'un groupe de numéros raccourcis selon un type du mode de saisie de numéro raccourci.

5. Le procédé selon la Revendication 4, où la présentation des informations d'utilisateur correspondant aux numéros raccourcis du groupe de numéros raccourcis selon le type du mode de saisie de numéro raccourci comprend au moins une opération parmi :
la présentation des informations d'utilisateur mises en correspondance avec des numéros raccourcis à un chiffre sur des touches numériques correspondantes du clavier tactile (230) lorsqu'une fenêtre de saisie d'informations de récepteur (210) est vide, et
la présentation des informations d'utilisateur mises en correspondance avec les numéros raccourcis en commençant par un numéro particulier sur les touches numériques correspondantes du clavier tactile (230) lorsque la fenêtre de saisie d'informations de récepteur (210) est remplie avec le numéro particulier.

6. Le procédé selon la Revendication 1, comprenant en outre :
la détection d'un autre événement tactile sur le clavier tactile,
la détermination (611) d'un type de l'autre événement tactile, et
la commande d'une actualisation des informations d'utilisateur présentées sur le clavier tactile ou d'une saisie effectuée avec des informations d'utilisateur sélectionnées selon le type de l'autre événement tactile.

7. Le procédé selon la Revendication 6, où la détermination (611) du type de l'autre événement tactile comprend :
la détermination (611) que le type de l'autre événement tactile est un événement tactile de pression longue lorsqu'une durée tactile est supérieure ou égale à un seuil.

8. Le procédé selon la Revendication 7, où l'événement tactile de pression longue sélectionne (613) une des informations d'utilisateur présentées sur le clavier tactile et l'événement tactile de pression brève appelle (621) les informations d'utilisateur mises en correspondance avec les numéros raccourcis appartenant à un autre groupe de numéros raccourcis et présente (623) les numéros raccourcis appelés sur le clavier tactile.

9. Le procédé selon la Revendication 7, comprenant en outre :
la vérification (613) d'un numéro raccourci correspondant à une touche numérique sélectionnée par l'événement tactile lorsque l'autre événement tactile est l'événement tactile de pression longue,
la récupération (615) d'informations d'utilisateur mises en correspondance avec le numéro raccourci vérifié, et
la commande (617) de l'exécution d'une fonction demandée en association avec les informations d'utilisateur récupérées.

10. Le procédé selon la Revendication 9, où la commande (617) de l'exécution de la fonction demandé en association avec les informations d'utilisateur récupérées comprend au moins une opération parmi :
la saisie des informations d'utilisateur récupérées dans une fenêtre de saisie d'informations de récepteur, et
la commande d'une exécution de fonction automatique en association avec les informations d'utilisateur récupérées selon la fonction exécutée avec le mode de saisie de numéro raccourci.

11. Le procédé selon la Revendication 1, où l'interprétation (621) de l'événement tactile comprend :
la sélection d'un groupe de numéros raccourcis en commençant par un numéro correspondant à la touche numérique sélectionnée par l'événement tactile,
l'extraction des informations de numéro raccourci du groupe de numéros raccourcis, et
la récupération des numéros raccourcis et des informations d'utilisateur mises en correspondance avec les numéros raccourcis en fonction des informations de numéro raccourci.

12. Le procédé selon la Revendication 1, où la reconfiguration (623) du clavier tactile (435) comprend en outre :
l'actualisation du clavier tactile (435) avec des touches numériques correspondant à des numéros raccourcis d'un groupe de numéros raccourcis d'au moins deux chiffres en commençant par un numéro de la touche numérique sélectionnée par l'événement tactile,
et la présentation (623) des informations d'utilisateur mises en correspondance avec les numéros raccourcis avec des touches numériques correspondantes.

13. Le procédé selon la Revendication 1, où le mode de saisie de numéro raccourci comprend un mode de fonctionnement acceptant une saisie d'informations basées sur un numéro raccourci.

14. Un dispositif d'utilisateur destiné à la fourniture d'un numéro raccourci, le dispositif d'utilisateur comprenant :
un panneau d'affichage (200) agencé de façon à afficher, dans un mode de saisie de numéro raccourci, une fenêtre de saisie d'informations de récepteur (405) et un clavier tactile (435) comprenant une pluralité de touches numériques correspondant à des numéros raccourcis et des informations d'utilisateur mises en correspondance avec les numéros raccourcis,
un panneau tactile (300) agencé de façon à détecter (609) un événement tactile sur le clavier tactile (435), et
une unité de commande (600) agencée de façon à :
commander l'affichage (607) des informations d'utilisateur mises en correspondance avec les numéros raccourcis pour un groupe de numéros raccourcis sur les touches numériques du clavier tactile (435),
où l'unité de commande (600) est agencée de façon à, lorsque l'événement tactile détecté est déterminé être un événement tactile de pression brève :
saisir un numéro correspondant à la touche numérique sélectionnée par l'événement tactile dans la fenêtre de saisie d'informations de récepteur (405),
interpréter (621) l'événement tactile en tant que demande pour un autre groupe de numéros raccourcis, le nouveau groupe de numéros raccourcis correspondant à un ou plusieurs numéros présentés dans la fenêtre de saisie d'informations de récepteur, et
reconfigurer (623) le clavier tactile (435) en fonction d'informations de numéro raccourci du groupe de numéros raccourcis appelé,
où la reconfiguration (623) du clavier tactile (435) comprend la détermination d'un numéro raccourci à deux chiffres ou plus par la combinaison d'un ou de plusieurs numéros présentés dans la fenêtre de saisie d'informations de récepteur (405) en tant que chiffres précédents du numéro raccourci et d'un des numéros correspondant aux touches numériques du clavier tactile (435) en tant que chiffre subséquent du numéro raccourci.

15. Le dispositif d'utilisateur selon la Revendication 14, où l'unité de commande (600) est agencée en outre de façon à :
extraire les informations d'utilisateur mises en correspondance avec les numéros raccourcis dans le mode de saisie de numéro raccourci, et
afficher (607) les informations d'utilisateur mises en correspondance avec les numéros raccourcis avec les touches numériques du clavier tactile (435) qui correspondent aux numéros raccourcis.

16. Le dispositif d'utilisateur selon la Revendication 14, où l'unité de commande (600) est agencée en outre de façon à :
rechercher (603) des numéros raccourcis prédéfinis dans le mode de saisie de numéro raccourci,
extraire les numéros raccourcis et les informations d'utilisateur mises en correspondance avec les numéros raccourcis en fonction des informations de numéro raccourci, et
trier (605) les numéros raccourcis en groupes en fonction d'un nombre de chiffres du numéro raccourci.

17. Le dispositif d'utilisateur selon la Revendication 14. où l'unité de commande (600) est agencée en outre de façon à :
présenter les informations d'utilisateur mises en correspondance avec des numéros raccourcis à un chiffre sur les touches numériques du clavier tactile (435) lorsqu'une fenêtre de saisie d'informations de récepteur est vide (405), et
présenter les informations d'utilisateur mises en correspondance avec les numéros raccourcis en commençant par un numéro particulier sur les touches numériques du clavier tactile (435) lorsque la fenêtre de saisie d'informations de récepteur (405) est remplie avec le numéro particulier.

18. Le dispositif d'utilisateur selon la Revendication 14, où l'unité de commande (600) est agencée en outre de façon à :
détecter un autre événement tactile,
déterminer (611) qu'un type de l'autre événement tactile est un événement tactile de pression longue,
vérifier (613) le numéro raccourci correspondant à la touche numérique sélectionnée par l'autre événement tactile,
récupérer (615) les informations d'utilisateur mises en correspondance avec le numéro raccourci vérifié, et
commander (617) l'exécution d'une fonction demandée en association avec les informations d'utilisateur récupérées.

19. Le dispositif d'utilisateur selon la Revendication 18, où l'unité de commande (600) est adaptée de façon à sélectionner des informations d'utilisateur présentées sur le clavier tactile (435) en réponse à l'événement tactile de pression longue.
